# EUROPEAN PATENT APPLICATION

(11) **EP 4 556 200 A1**
(43) Date of publication of application: **21.05.2025**
(21) Application number: 23870199.9
(22) Date of filing: 05.09.2023
(51) Int. Cl.: B29C 64/153, B33Y 50/00

(54) **LASER SCANNING METHOD AND APPARATUS FOR THREE-DIMENSIONAL OBJECT MANUFACTURING, AND STORAGE MEDIUM**

(30) Priority: 27.09.2022 CN 202211181864
(71) Applicant: Farsoon Technologies Co. Ltd., Changsha, Hunan 410221 (CN)
(72) Inventor: XU, Feng, Changsha, Hunan 410221 (CN); CAO, Changlei, Changsha, Hunan 410221 (CN); LIU, Liang, Changsha, Hunan 410221 (CN); LI, Jinxiang, Changsha, Hunan 410221 (CN); LIU, Ligeng, Changsha, Hunan 410221 (CN); CHEN, Huqing, Changsha, Hunan 410221 (CN)
(74) Representative: Groth & Co. KB
(86) International application number: PCT/CN2023/117005
(87) International publication number: WO 2024/066959

(57) **Abstract**

A laser scanning method and apparatus for three-dimensional object manufacturing, and a storage medium. The laser scanning method comprises: slicing a workpiece to be printed to obtain a cross-sectional profile of each layer, wherein the cross-sectional profile is one or more closed polygons; configuring a plurality of filling vectors for the interior of at least one polygon; selecting all filling vectors, connected to or close to the profile, in a preset area of the polygon configured with the plurality of filling vectors, and controlling the directions of the filling vectors connected to or close to the profile, so that end points of all the filling vectors connected to or close to the profile are terminating points of the filling vectors, and starting points of all the filling vectors are all far away from the profile; and performing laser scanning according to the finally obtained directions of all the filling vectors. The present application can effectively avoid melting pool fluctuation caused by the scanning of starting points of filling vectors, thereby improving the success rate of printing.

## Description

### CROSS-REFERENCE TO RELATED APPLICATIONS

The present application claims priority to Chinese patent application No. 202211181864.9 filed on September 27, 2022 to the China Patent Office, and entitled "LASER SCANNING METHOD AND APPARATUS FOR THREE-DIMENSIONAL OBJECT MANUFACTURING, AND STORAGE MEDIUM", the entire content of which is incorporated herein by reference.

### TECHNICAL FIELD

The present application relates to the technical field of additive manufacturing, in particular to a laser scanning method and apparatus for manufacturing a three-dimensional object, a computer device, and a storage medium.

### BACKGROUND

Additive manufacturing is a rapid manufacturing technology that forms a three-dimensional object by controlling a laser for scanning layer by layer and stacking layer by layer. A technological process thereof is as follows. Firstly, a three-dimensional model of a workpiece is sliced to obtain profile line information of each layer of the workpiece. Powdered material is evenly spread on a surface of a working platform, and the laser selectively melts powder according to system instructions. After a cross section is completed, a new layer of material is spread, and scanning is continued selectively according to cross-sectional information corresponding to the three-dimensional object. Powder spreading and scanning are performed on a next cross section according to this method, and the three-dimensional object is finally obtained.

Scanning manners of the prior art mainly include parallel line scanning, profile line equidistant line scanning, and mixed scanning of the two, wherein in parallel line scanning, directions of two adjacent scanning vectors may be the same or opposite. In the above scanning manners of the prior art, heat distribution in an area scanned by the laser is concentrated, which is prone to cause problems such as warping deformation and cracking due to the formation of a large temperature gradient with surrounding powder which is not scanned by the laser. For those skilled in the art, a scanning path, scanning power, scanning speed and scanning spacing of the laser in a scanning process can all affect the distribution of heat and the distribution of residual stress, thus leading to warping deformation of the workpiece, so the optimization and improvement of the laser scanning manners has always been a subject of research in the art.

### SUMMARY OF THE INVENTION

In order to solve a technical problem of a laser scanning manner of the prior art, which results in warping deformation of a workpiece to be printed, the present application provides a laser scanning method and apparatus for manufacturing a three-dimensional object, a computer device, and a storage medium. The laser scanning method can suppress local (especially at the profile line) warping in a printing process, improving the success rate of printing, i.e., a surface quality of the workpiece to be printed can be effectively improved.

In order to achieve the above purpose, the present application provides a laser scanning method for manufacturing a three-dimensional object, including:
slicing a workpiece to be printed to obtain a cross-sectional profile line of each layer, wherein the cross-sectional profile line is one or more closed polygons;
configuring a plurality of filling vectors for an interior of at least one of the one or more closed polygons;
selecting all filling vectors that are connected to or close to the profile line in a preset area of the polygon configured with the plurality of filling vectors, and controlling directions of the filling vectors that are connected to or close to the profile line to make end points of all the filling vectors that are connected to or close to the profile line be terminating points of these filling vectors, with starting points of all these filling vectors being away from the profile line; and
performing laser scanning according to finally obtained directions of all the configured filling vectors.

As a further optional solution of the present application, the step of selecting all the filling vectors that are connected to or close to the profile line in a preset area of the polygon configured with the plurality of filling vectors, and controlling the directions of the filling vectors that are connected to or close to the profile line to make the end points of all the filling vectors that are connected to or close to the profile line be the terminating points of these filling vectors, with the starting points of all these filling vectors being away from the profile line specifically includes:
step 1, selecting all the filling vectors that are connected to or close to the profile line in the preset area of the polygon configured with the plurality of filling vectors to form a vector set A;
step 2, respectively performing the following judgment and operation on each filling vector Ai in the vector set A: if both a starting point and a terminating point of a certain filling vector Ai are connected to or close to the profile line, segmenting the filling vector Ai into two filling vectors Bi and Ci; otherwise, designating the filling vector Ai as Di; and forming a new vector set E by all the filling vectors Bi, Ci, and Di, where i is 1, 2, 3, ... N, wherein N is a total number of the filling vectors in the vector set A; and
step 3, respectively performing the following judgment and operation on each filling vector Ei in the vector set E: if a terminating point of a certain filling vector Ei is connected to or close to the profile line, keeping the filling vector Ei unchanged and designating it as Fi; otherwise, reversing the filling vector Ei to obtain a new filling vector Hi, and forming a final vector set J by all the filling vectors Fi and Hi.

As a further optional solution of the present application, the preset area is an upper surface area or a lower surface suspension area of the workpiece to be printed.

As a further optional solution of the present application, the filling vector that is connected to or close to the profile line is a filling vector that has an end point at a distance within 0.5 mm from the profile line.

As a further optional solution of the present application, in the step of segmenting the filling vector Ai into the two filling vectors Bi and Ci, a segmenting point thereof is at a midpoint position of the filling vector Ai.

As a further optional solution of the present application, in the step of configuring the plurality of filling vectors for the interior of at least one of the one or more closed polygons, the plurality of filling vectors are along straight lines, and part of the filling vectors or all the filling vectors are parallel to each other.

The present application further provides a laser scanning apparatus for manufacturing a three-dimensional object, including a memory and a processor. The memory has a computer program stored therein, and the processor is configured to execute the computer program to implement the steps of the laser scanning method for manufacturing a three-dimensional object according to any one of the above.

The present application further provides a device for manufacturing a three-dimensional object, including the laser scanning apparatus for manufacturing the three-dimensional object further provided by the present application.

The present application also provides a computer readable storage medium, having a computer program stored therein. The computer program, when executed by a processor, causes the processor to implement the steps of the laser scanning method for manufacturing a three-dimensional object according to any one of the above.

In the laser scanning method for manufacturing the three-dimensional object of the present application, by selecting all the filling vectors that are connected to or close to the profile line in the preset area of the polygon configured with the plurality of filling vectors, and controlling the directions of the filling vectors that are connected to or close to the profile line to make the end points of all the filling vectors that are connected to or close to the profile line be the terminating points of these filling vectors, with the starting points of all these filling vectors being away from the profile line. This can effectively avoid melting pool fluctuation caused by the scanning of the starting points of the filling vectors, i.e., local (especially at the profile line) warping can be suppressed in a printing process, thereby improving the success rate of printing, i.e., a surface quality of the workpiece to be printed can be effectively improved.

### BRIEF DESCRIPTION OF THE DRAWINGS

FIG. 1 is a method flowchart of Embodiment 1 provided by a laser scanning method for manufacturing a three-dimensional object of the present application.
FIG. 2 is Working Diagram 1 of Embodiment 1 provided by a laser scanning method for manufacturing a three-dimensional object of the present application.
FIG. 3 is Working Diagram 2 of Embodiment 1 provided by a laser scanning method for manufacturing a three-dimensional object of the present application.
FIG. 4 is Working Diagram 3 of Embodiment 1 provided by a laser scanning method for manufacturing a three-dimensional object of the present application.
FIG. 5 is Working Diagram 4 of Embodiment 1 provided by a laser scanning method for manufacturing a three-dimensional object of the present application.
FIG. 6 is Working Diagram 5 of Embodiment 1 provided by a laser scanning method for manufacturing a three-dimensional object of the present application.
FIG. 7 is Working Diagram 1 of Embodiment 2 provided by a laser scanning method for manufacturing a three-dimensional object of the present application.
FIG. 8 is Working Diagram 2 of Embodiment 2 provided by a laser scanning method for manufacturing a three-dimensional object of the present application.
FIG. 9 is Working Diagram 3 of Embodiment 2 provided by a laser scanning method for manufacturing a three-dimensional object of the present application.
FIG. 10 is Working Diagram 4 of Embodiment 2 provided by a laser scanning method for manufacturing a three-dimensional object of the present application.
FIG. 11 is Working Diagram 1 of Embodiment 3 provided by a laser scanning method for manufacturing a three-dimensional object of the present application.
FIG. 12 is Working Diagram 2 of Embodiment 3 provided by a laser scanning method for manufacturing a three-dimensional object of the present application.
FIG. 13 is Working Diagram 3 of Embodiment 3 provided by a laser scanning method for manufacturing a three-dimensional object of the present application.
FIG. 14 is Working Diagram 4 of Embodiment 3 provided by a laser scanning method for manufacturing a three-dimensional object of the present application.
FIG. 15 is a schematic structural diagram of a computer device in an embodiment of the present application.

### DETAILED DESCRIPTION

In order to make objectives, technical solutions and advantages of the present application more clear and understandable, the present application is further illustrated in detail below in conjunction with accompanying drawings and embodiments. It should be understood that the specific embodiments described herein are only used to explain the present application and are not used to limit the present application.

In order to solve a technical problem of a laser scanning manner of the prior art, which results in warping deformation of a workpiece to be printed due to the existence of the distribution of heat and the distribution of residual stress, the present application provides a laser scanning method for manufacturing a three-dimensional object, including:
slicing a workpiece to be printed to obtain a cross-sectional profile line of each layer, wherein the cross-sectional profile line is one or more closed polygons;
configuring a plurality of filling vectors for an interior of at least one of the one or more closed polygons;
selecting all filling vectors that are connected to or close to the profile line in a preset area of the polygon configured with the plurality of filling vectors, and controlling directions of the filling vectors that are connected to or close to the profile line to make end points of all these filling vectors that are connected to or close to the profile line be terminating points of these filling vectors, with starting points of all these filling vectors being away from the profile line; and
performing laser scanning according to finally obtained directions of all the configured filling vectors.

The laser scanning method for manufacturing the three-dimensional object of the present application can effectively avoid defects located on the profile line and the surface of the workpiece caused by melting pool fluctuation caused by the scanning of the starting points of the filling vectors, i.e., local (especially at the profile line) warping can be suppressed in a printing process, thereby improving the success rate of printing, i.e., a surface quality of the workpiece to be printed can be effectively improved.

The above preset area is an area close to the profile line of the workpiece to be printed, wherein an upper surface area or a lower surface suspension area of the workpiece to be printed has a best application effect. Of course, in a specific implementation, the technical solution of the present application may further be executed for all areas of the polygon of the workpiece to be printed, or for some areas of the polygon of the workpiece to be printed (e.g., a combination area of the upper/lower surface area of the workpiece to be printed and some non-upper/lower surface areas), which may be specifically determined according to actual needs.

It needs to be noted here that the filling vector that is connected to or close to the profile line is a filling vector that has an end point at a distance within 0.5 mm from the profile line.

Optionally, in the above step of segmenting the filling vector Ai into the two filling vectors Bi and Ci, a segmenting point thereof is at a midpoint position of the filling vector Ai, which avoids the segmenting producing vectors that are too short.

Further optionally, in the above step of segmenting the filling vector Ai into the two filling vectors Bi and Ci,, the two segmented vectors are provided with overlap areas at the segmenting point, a size of the overlap areas is in a range of 0 to 0.5 mm, and remelting is performed on the overlap areas to avoid possible defects at a lap joint, i.e., a scanning quality is further ensured.

In a specific implementation, in the step of configuring the plurality of filling vectors for the interior of at least one of the one or more closed polygons, the plurality of filling vectors are along straight lines, and part of the filling vectors or all the filling vectors are parallel to each other. However, in specific implementations, the present application does not limit the filling vectors to straight lines, which may also be curves and the like. Similarly, the present application does not limit spacing between the filling vectors and a relationship between adjacent filling vectors, e.g., the adjacent filling vectors may also be in a perpendicular relationship and the like.

In order to enable those skilled in the art to better understand and realize the technical solutions of the present application, the technical solutions of the present application are described in detail below in a form of embodiments and in conjunction with the accompanying drawings.

### Embodiment 1

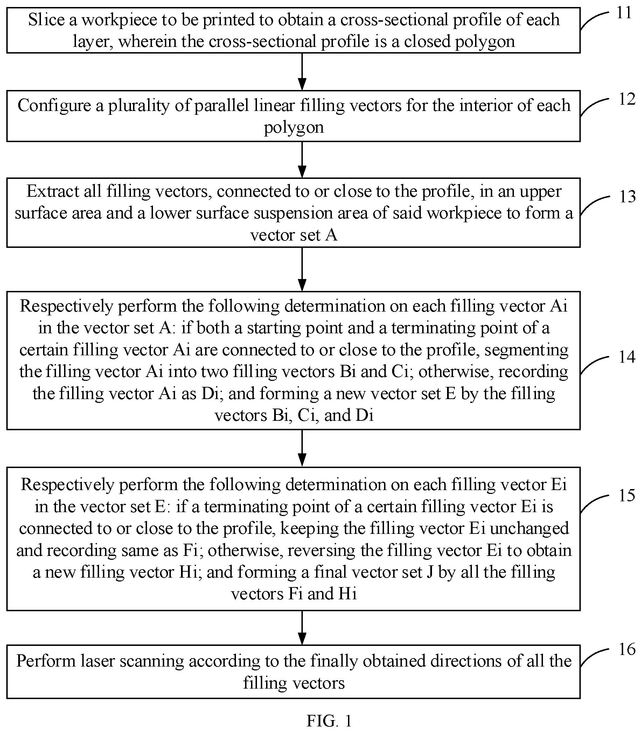

As shown in FIG. 1, a laser scanning method for manufacturing a three-dimensional object of this embodiment includes the following steps.

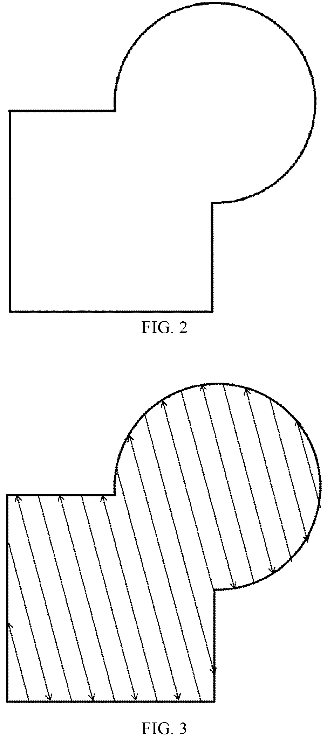

Step 11, a workpiece to be printed is sliced to obtain a cross-sectional profile line of each layer. The cross-sectional profile line is a closed polygon, as shown in FIG 2. It needs to be noted here that a specific number of closed polygons constituting the cross-sectional profile line depends mainly on a shape of the workpiece to be printed.

Step 12, a plurality of parallel linear filling vectors are configured for an interior of at least one of the one or more polygons, as shown in FIG 3.

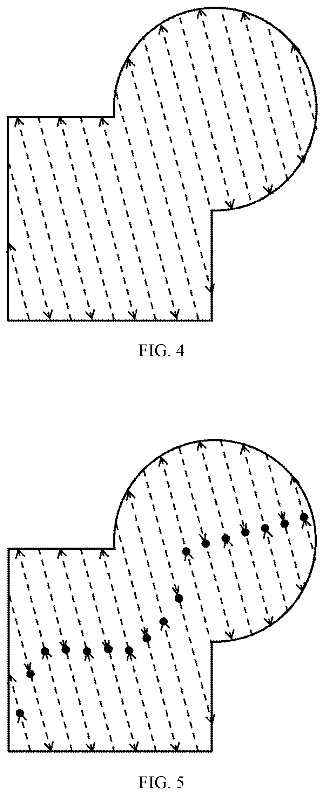

Step 13, all filling vectors that are connected to or close to the profile line of a certain polygon of the workpiece to be printed are extracted to form a vector set A, as shown by dotted lines in FIG. 4.

Step 14, the following judgment and operation are respectively performed on each filling vector Ai in the vector set A: if both a starting point and a terminating point of a certain filling vector Ai are connected to or close to the profile line, the filling vector Ai is segmented into two filling vectors Bi and Ci; otherwise, the filling vector Ai is designated as Di; and a new vector set E is formed by all the filling vectors Bi, Ci, and Di, as shown in FIG 5. Where i is 1, 2, 3, ... N, wherein N is a total number of the filling vectors in the vector set A.

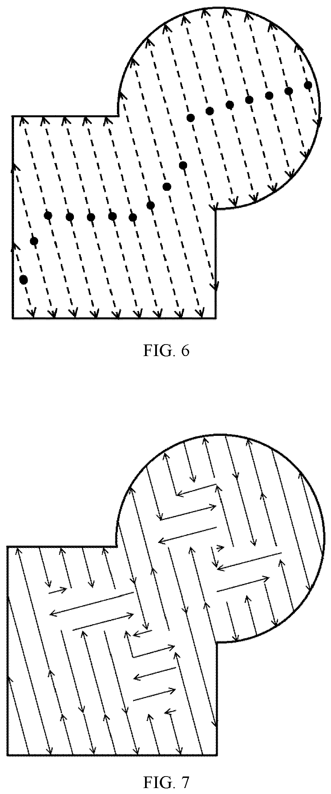

Step 15, the following judgment and operation are respectively performed on each filling vector Ei in the vector set E: if a terminating point of a certain filling vector Ei is connected to or close to the profile line, the filling vector Ei is kept unchanged and designated as Fi; otherwise, the filling vector Ei is reversed to obtain a new filling vector Hi, and a final vector set J is formed by all the filling vectors Fi and Hi, as shown in FIG 6.

Step 16, laser scanning is performed according to finally obtained directions of all the configured filling vectors.

### Embodiment 2

A laser scanning method for manufacturing a three-dimensional object of this embodiment includes the following steps.

Step 21, a workpiece to be printed is sliced to obtain a cross-sectional profile line of each layer. The cross-sectional profile line is a closed polygon.

Step 22, a plurality of filling vectors are configured for an interior of at least one of the one or more polygons, as shown in FIG 7. A peripheral area of the closed polygon is provided with a plurality of filling vectors that are parallel to each other, a middle area is provided with several sub-areas, each sub-area consists of several filling vectors that are parallel to each other, and the filling vectors of adjacent sub-areas in all the sub-areas are perpendicular to each other.

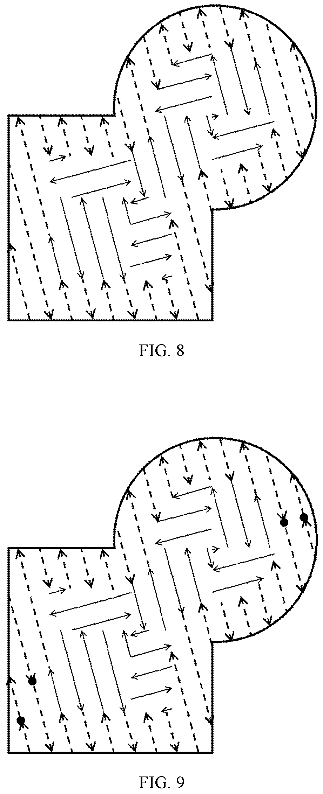

Step 23, all filling vectors that are connected to or close to the profile line of the workpiece to be printed (also refers to a whole area of a certain polygon) are extracted to form a vector set A, as shown by dotted lines in FIG. 8.

Step 24, the following judgment and operation is respectively performed on each filling vector Ai in the vector set A: if both a starting point and a terminating point of a certain filling vector Ai are connected to or close to the profile line, the filling vector Ai is segmented into two filling vectors Bi and Ci; otherwise, the filling vector Ai is designated as Di; and a new vector set E is formed by all the filling vectors Bi, Ci, and Di, as shown in FIG 9. Where i is 1, 2, 3, ... N, wherein N is a total number of the filling vectors in the vector set A.

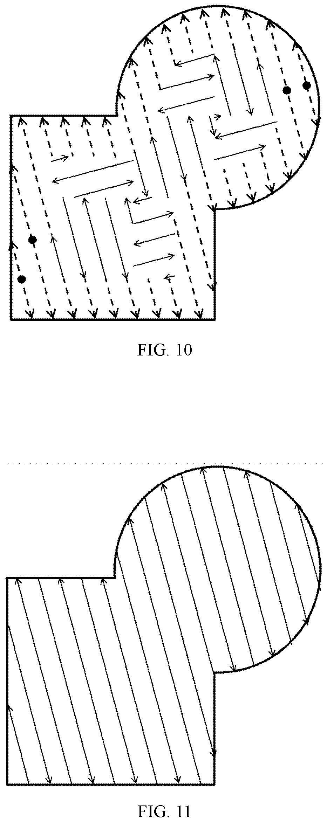

Step 25, the following judgment and operation are respectively performed on each filling vector Ei in the vector set E: if a terminating point of a certain filling vector Ei is connected to or close to the profile line, the filling vector Ei is kept unchanged and designated as Fi; otherwise, the filling vector Ei is reversed to obtain a new filling vector Hi, and a final vector set J is formed by all the filling vectors Fi and Hi, as shown in FIG 10.

Step 26, laser scanning is performed according to finally obtained directions of all the configured filling vectors.

### Embodiment 3

A laser scanning method for manufacturing a three-dimensional object of this embodiment includes the following steps.

Step 31, a workpiece to be printed is sliced to obtain a cross-sectional profile line of each layer. The cross-sectional profile line is a closed polygon.

Step 32, a plurality of parallel linear filling vectors are configured for an interior of at least one of the one or more polygons, as shown in FIG 11.

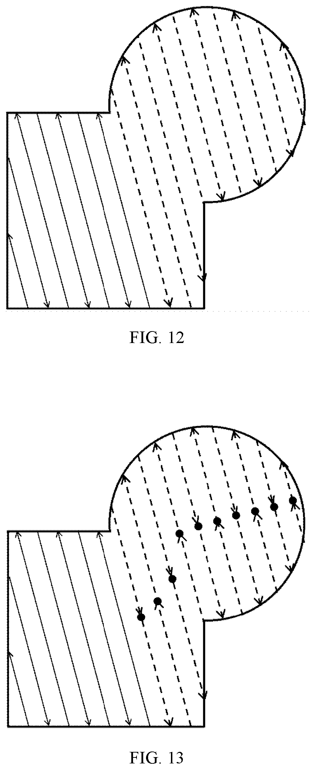

Step 33, part of filling vectors that are connected to or close to the profile line of the workpiece to be printed are extracted to form a vector set A, as shown by dotted lines in FIG. 12.

Step 34, the following judgment and operation are respectively performed on each filling vector Ai in the vector set A: if both a starting point and a terminating point of a certain filling vector Ai are connected to or close to the profile line, the filling vector Ai is segmented into two filling vectors Bi and Ci; otherwise, the filling vector Ai is designated as Di; and a new vector set E is formed by all the filling vectors Bi, Ci, and Di, as shown in FIG 13. Where i is 1, 2, 3, ... N, wherein N is a total number of the filling vectors in the vector set A.

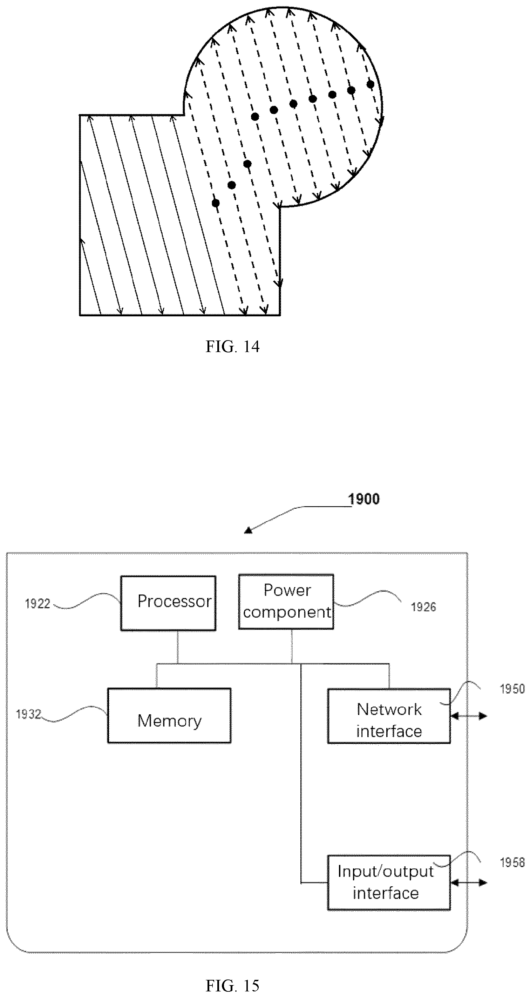

Step 35, the following judgment and operation are respectively performed on each filling vector Ei in the vector set E: if a terminating point of a certain filling vector Ei is connected to or close to the profile line, the filling vector Ei is kept unchanged and designated as Fi; otherwise, the filling vector Ei is reversed to obtain a new filling vector Hi, and a final vector set J is formed by all the filling vectors Fi and Hi, as shown in FIG 14.

Step 36, laser scanning is performed according to finally obtained directions of all the configured filling vectors.

The steps executed in Embodiment 2 and Embodiment 1 are similar, and a difference is that the filling vectors configured in Embodiment 2 and Embodiment 1 are different.

The steps executed in Embodiment 3 and Embodiment 1 are similar, a differences is that Embodiment 3 executes the above technical solution of the present application only for part of the area of interest (the lower surface) of the workpiece to be printed, whereas the Embodiment 1 executes the above technical solution of the present application for the whole area of a certain polygon of the workpiece to be printed.

The present application further provides a laser scanning apparatus for manufacturing a three-dimensional object, including a memory and a processor. The memory has a computer program stored therein, and the processor is configured to execute the computer program to implement the steps of the laser scanning method for manufacturing a three-dimensional object of any one of the above embodiments.

The present application also provides a device for manufacturing a three-dimensional object, including the above laser scanning apparatus for manufacturing the three-dimensional object. It needs to be noted here that the device further includes other apparatuses of the prior art, such as a powder spreading apparatus, which will not be specifically described herein.

FIG. 15 is a block diagram of a computer device 1900 for laser scanning for manufacturing a three-dimensional object in an embodiment of the present application. For example, the computer device 1900 may be a server or a terminal device. Referring to FIG. 15, the computer device 1900 includes: a processor 1922 and a memory 1932, wherein the memory 1932 stores an executable instruction, such as an application, that may be executed by the processor 1922. The application stored in the memory 1932 may include one or more modules corresponding to a set of executable instructions. In addition, the processor 1922 is configured to execute executable instructions to execute the steps of the laser scanning method for manufacturing the three-dimensional object in the above embodiments.

A power component 1926 may be configured to execute power management of the computer device 1900. A wired or wireless network interface 1950 may be configured to connect the computer device 1900 to a network. The computer device 1900 may further include an input/output (I/O) interface 1958. The computer device 1900 may operate an operating system stored in the memory 1932, such as Windows ServerTM, Mac OS XTM, UnixTM, LinuxTM, and FreeBSDTM.

The embodiment of the present application may be a computer device, system, method, and/or computer program product. The computer program product may include a computer readable storage medium carrying executable instructions for causing the processor to implement the steps of the laser scanning method for manufacturing the three-dimensional object in the embodiments of the present application.

It needs to be noted that FIG. 15 only illustrates a hardware architecture of the computer device, but it should be understood that it is not required to implement all of the illustrated parts, and more or fewer parts may be alternatively implemented.

The present application also provides a computer readable storage medium, having a computer program stored therein. The computer program, when executed by a processor, causes the processor to implement the steps of the laser scanning method for manufacturing a three-dimensional object according to any one of the above embodiments. The computer readable storage medium may be a volatile or non-volatile computer readable storage medium.

The computer readable storage medium may be a tangible device that contains processor executable instructions. For example, the computer readable storage medium may be, but is not limited to, an electric storage device, a magnetic storage device, an optical storage device, an electromagnetic storage device, a semiconductor storage device, or any suitable combination of the above. More specifically, the computer readable storage medium may include: a portable computer disk, a hard disk, a random access memory (RAM), a read-only memory (ROM), an erasable programmable read-only memory (EPROM or flash memory), a static random access memory (SRAM), a portable compact disc read-only memory (CD-ROM), a digital versatile disc (DVD), a memory stick, a floppy disk, a mechanical encoding device, for example, a punch card or a raised structure in a groove with instructions stored thereon, and any suitable combination of the above. The computer readable storage medium used herein is not to be interpreted as transient signals per se, such as radio waves or other freely propagating electromagnetic waves, electromagnetic waves propagating through waveguides or other transmission media (e.g., light pulses through fiber-optic cables), or electrical signals transmitted through electrical wires.

The instructions described herein may be downloaded from a computer readable storage medium to various computing/processing devices or downloaded to an external computer or external storage device over a network, such as the Internet, a local area network, a wide area network, and/or a wireless network. The network may include copper transmission cables, fiber optic transmission, wireless transmission, routers, firewalls, switches, gateway computers, and/or edge servers. A network adapter card or network interface in each computing/processing device receives computer-readable program instructions from a network and forwards the computer-readable program instructions for storage in a computer readable storage medium in each computing/processing device.

The instructions for executing the operation of the present application may be assembly instructions, instruction set architecture (ISA) instructions, machine instructions, machine-dependent instructions, microcode, firmware instructions, status setting data, or source code or object code written in any combination of one or a plurality of programming languages, the programming languages including object-oriented programming languages such as Smalltalk and C++, and conventional procedural programming languages such as the "C" language or similar programming languages. The instructions may be executed entirely on a user computer, partially on the user computer, as a stand-alone software package, partially on the user computer and partially on a remote computer, or entirely on the remote computer or server. In a case where the remote computer is involved, the remote computer may be connected to the user computer through any kind of networks, including a local area network (LAN) or a wide area network (WAN), or may be connected to an external computer (for example, connected through the Internet using an Internet service provider). In some embodiments, an electronic circuit, such as a programmable logic circuit, a field programmable gate array (FPGA), or a programmable logic array (PLA), is customized by utilizing status information of the instructions. The electronic circuit may execute the instructions so as to implement various aspects of the present application.

Obviously, it should be appreciated by those skilled in the art that the modules or steps of the embodiments of the present application above may be implemented with general-purpose computing apparatuses, and they may be centralized on a single computing apparatus, or distributed on a network composed of a plurality of computing apparatuses. Optionally, they may be implemented with program codes executable by a computing apparatus, so that they may be stored in a storage apparatus to be executed by the computing apparatus, and, in some cases, the steps shown or described may be executed in an order different from that herein, or they may be implemented by making them into individual integrated circuit modules respectively, or by making a plurality of modules or steps of them into a single integrated circuit module. Therefore, the embodiment of the present application are not limited to any specific hardware and software combination.

The technical features of the above embodiments may be combined in any way, and all possible combinations of the technical features of the above embodiments have not been described for the sake of conciseness of description. However, as long as there is no contradiction in the combinations of these technical features, they should all be considered to be within the scope designated in this specification. The above embodiments express only several implementations of the present application, which are described in a more specific and detailed manner, but are not to be construed as a limitation of the scope of the patent application. It should be noted that for those of ordinary skill in the art, a number of transformations and improvements may further be made without departing from the conception of the present application, and these all fall within the scope of protection of the present application. Therefore, the scope of protection of the present application shall be subject to the appended claims.

## Claims

1. A laser scanning method for manufacturing a three-dimensional object, comprising:
slicing a workpiece to be printed to obtain a cross-sectional profile line of each layer, wherein the cross-sectional profile line is one or more closed polygons;
configuring a plurality of filling vectors for an interior of at least one of the one or more closed polygons;
selecting all filling vectors that are connected to or close to the profile line in a preset area of the polygon configured with the plurality of filling vectors, and controlling directions of the filling vectors that are connected to or close to the profile line to make end points of all the filling vectors that are connected to or close to the profile line be terminating points of these filling vectors, with starting points of all these filling vectors being away from the profile line; and
performing laser scanning according to finally obtained directions of all the configured filling vectors.

2. The laser scanning method for manufacturing a three-dimensional object according to claim 1, wherein the step of selecting all the filling vectors that are connected to or close to the profile line in a preset area of the polygon configured with the plurality of filling vectors, and controlling the directions of the filling vectors that are connected to or close to the profile line to make end points of all the filling vectors that are connected to or close to the profile line be terminating points of these filling vectors, with starting points of all these filling vectors being away from the profile line specifically comprises:
step 1, selecting all the filling vectors that are connected to or close to the profile line in the preset area of the polygon configured with the plurality of filling vectors to form a vector set A;
step 2, respectively performing the following judgment and operation on each filling vector Ai in the vector set A: if both a starting point and a terminating point of a certain filling vector Ai are connected to or close to the profile line, segmenting the filling vector Ai into two filling vectors Bi and Ci; otherwise, designating the filling vector Ai as Di; and forming a new vector set E by all the filling vectors Bi, Ci, and Di, where i is 1, 2, 3, ... N, wherein N is a total number of the filling vectors in the vector set A; and
step 3, respectively performing the following judgment and operation on each filling vector Ei in the vector set E: if a terminating point of a certain filling vector Ei is connected to or close to the profile line, keeping the filling vector Ei unchanged and designating it as Fi; otherwise, reversing the filling vector Ei to obtain a new filling vector Hi; and forming a final vector set J by all the filling vectors Fi and Hi.

3. The laser scanning method for manufacturing a three-dimensional object according to claim 1 or 2, wherein the preset area is an upper surface area or a lower surface suspension area of the workpiece to be printed.

4. The laser scanning method for manufacturing a three-dimensional object according to claim 1 or 2, wherein a filling vector that is connected to or close to the profile line is a filling vector that has an end point at a distance within 0.5mm from the profile line.

5. The laser scanning method for manufacturing a three-dimensional object according to claim 1 or 2, wherein, in the step of segmenting the filling vector Ai into the two filling vectors Bi and Ci, a segmenting point thereof is at a midpoint position of the filling vector Ai.

6. The laser scanning method for manufacturing a three-dimensional object according to claim 1 or 2, wherein, in the step of configuring a plurality of filling vectors for an interior of at least one of the one or more closed polygons, the plurality of filling vectors are along straight lines, and part of the filling vectors or all the filling vectors are parallel to each other.

7. A laser scanning apparatus for manufacturing a three-dimensional object, comprising a memory and a processor, wherein the memory has a computer program stored therein, and the processor is configured to execute the computer program to implement the steps of the laser scanning method for manufacturing a three-dimensional object according to any one of claims 1 to 6.

8. A device for manufacturing a three-dimensional object, comprising the laser scanning apparatus for manufacturing a three-dimensional object according to claim 7.

9. A computer readable storage medium, having a computer program stored therein, wherein the computer program, when executed by a processor, causes the processor to implement the steps of the laser scanning method for manufacturing a three-dimensional object according to any one of claims 1 to 6.
